# EUROPÄISCHE PATENTSCHRIFT

(11) **EP 4 306 272 B1**
(45) Veröffentlichungstag und Bekanntmachung des Hinweises auf die Patenterteilung: **02.09.2026**
(21) Anmeldenummer: 23183209.8
(22) Anmeldetag: 04.07.2023
(51) Int. Cl.: B25J 15/06, B25J 21/00, B65G 47/92

(54) **VORRICHTUNG ZUR HANDHABUNG VON FÖRDERGUT INNERHALB EINES BARRIERESYSTEMS**
DEVICE FOR HANDLING MATERIAL TO BE CONVEYED WITHIN A BARRIER SYSTEM
DISPOSITIF DE MANIPULATION DE PRODUITS À TRANSPORTER À L'INTÉRIEUR D'UN SYSTÈME DE BARRIÈRE

(30) Priorität: 14.07.2022 DE 102022117631
(43) Veröffentlichungstag der Anmeldung: 17.01.2024
(73) Patentinhaber: Syntegon Technology GmbH, 70372 Stuttgart (DE)
(72) Erfinder: Nagler, Stefan, 73485 Unterschneidheim (DE); Krauß, Ulrich, 74532 Ilshofen (DE); Ilgenfritz, Markus, 91555 Feuchtwangen (DE); Stegmeier, Samuel, 74594 Wuestenau (DE)
(74) Vertreter: Novagraaf Group

(56) Entgegenhaltungen:
- DE-U1- 202005 017 182
- DE-U1- 202016 008 504
- US-A1- 2019 237 354

## Beschreibung

Die Erfindung betrifft eine Vorrichtung zur Handhabung von Fördergut innerhalb eines Barrieresystems, die insbesondere dazu geeignet ist mit einer Transfervorrichtung zusammen zu wirken, mit welcher Fördergüter in das Barrieresystem eingebracht werden können oder aus dem Barrieresystem herausgebracht werden können. Solch eine Transfervorrichtung ist insbesondere dazu geeignet, das Fördergut unter Barrieresystembedingungen zu transportieren und bildet selbst bevorzugt eine Art kleines Barrieresystem. Eine solche Transfervorrichtung kann bevorzugt an einen Andockport des Barrieresystems angeschlossen werden und dann geöffnet werden, damit das Fördergut aus der Transfervorrichtung heraus in das Barrieresystem oder umgekehrt transportiert werden kann.

Systeme bestehend aus Barrieresystem und Transfervorrichtung bilden ein Gesamtsystem zum Handling von Fördergütern. Das Barrieresystem kann beispielsweise ein Reinraum sein. Das Barrieresystem kann auch ein System zum sicheren Handling von kontaminierten Stoffen sein, deren Entweichen in die Umwelt sicher verhindert werden soll.

Grundsätzlich ist es erwünscht Fördergüter in Barrieresystemen und Reinräumen mit möglichst wenig manuellen Bedienereingriffen zu prozessieren. Insbesondere Bedienereingriffe von Hand (bspw. über Handschuheingriffe) sind aufwendig und problematisch und sollten nach Möglichkeit vermieden werden. Darüber hinaus erwünscht ist ein möglichst prozesssicheres Handling von Fördergütern in Reinräumen, welches ohne das Auftreten von Fehlern/gestörten Zuständen erfolgen kann. Fehler und gestörte Zustände beim Handling von Fördergütern in Reinräumen sind regelmäßig besonders problematisch, weil die Zugänglichkeit in einem Barrieresystem naturgemäß eingeschränkt ist, um die Barrieresystembedingungen aufrecht erhalten zu können.

Aus der Schrift US 2019/0237354 A1, die den Einleitungsteil von Anspruch 1 offenbart, ist ein Barrieresystem für die Halbleiterfertigung bekannt, in welchem zur Erledigung von Aufgaben ein Roboterarm angeordnet ist.

Aufgabe der vorliegenden Erfindung ist es, die mit Bezug auf den Stand der Technik geschilderten Problematiken wenigstens teilweise zu lösen. Es soll insbesondere ein Barrieresystem zur Prozessierung von pharmazeutischen Produkten als Fördergut aufweisend eine Vorrichtung zur Handhabung von Fördergut in Reinräumen vorgestellt werden, die ein effektives Handling ermöglicht und eine hohe Sicherheit der Prozessierung bietet.

Diese Aufgabe wird gelöst mit der Erfindung gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann die einzelnen Merkmale in technologisch sinnvoller Weise miteinander kombiniert und damit zu weiteren Ausgestaltungen der Erfindung gelangt.

Hier beschrieben werden soll ein Barrieresystem zur Prozessierung von pharmazeutischen Produkten als Fördergut aufweisend eine Vorrichtung zur Handhabung von Fördergut innerhalb eines Barrieresystems, aufweisend einen in dem Barrieresystem angeordneten Manipulator mit einem Magnetaktor zur Aufbringung einer magnetischen Kraft auf das Fördergut, welcher eine bauartbedingte magnetische Wirkrichtung der magnetischen Kraft aufweist, wobei der Manipulator innerhalb des Barrieresystems angeordnet ist und dazu eingerichtet das Fördergut mit der magnetischen Kraft an den Manipulator zu koppeln und mit dem Manipulator innerhalb des Barrieresystems zu bewegen.

Die Vorrichtung umfasst insbesondere den Manipulator, der innerhalb des Barrieresystems angeordnet sein kann, oder für die Anordnung innerhalb des Barrieresystems vorgesehen sein kann. Die Vorrichtung ist bevorzugt Teil eines Barrieresystems.

Der Manipulator kann beispielsweise ein Roboterarm oder eine ähnliche Vorrichtung sein, der bevorzugt einen Manipulatorkopf aufweist, welcher innerhalb des Barrieresystems gezielt bewegt werden kann. Der Magnetaktor ist bevorzugt an dem Manipulatorkopf angeordnet. Der Manipulator ist bevorzugt elektrisch angetrieben. Der Manipulator hat bevorzugt eine Mehrzahl von aneinander angeordneten Manipulatorarmsegmenten, die jeweils mit Gelenken miteinander verbunden sind. An einem letzten Manipulatorarmsegment ist bevorzugt der Manipulatorkopf angeordnet. Die Gelenke sind bevorzugt jeweils mit elektrischen Antrieben angetrieben, um die Manipulatorarmsegmente relativ zueinander zu bewegen. Die elektrischen Antriebe des Manipulators werden bevorzugt von einem Steuergerät angesteuert, um zielgerichtete Bewegungen des Manipulators bzw. des Manipulatorkopfes mit dem Magnetaktor zu erreichen.

Besonders bevorzugt ist, wenn der Magnetaktor mindestens einen Elektromagneten aufweist.

Der Magnetaktor kann wahlweise mit Permanentmagneten oder Elektromagneten ausgeführt sein. In bevorzugten Ausführungsvarianten ist der Magnetaktor aktivierbar und deaktivierbar. Das bedeutet, dass die von dem Magnetaktor erzeugte magnetische Kraft bevorzugt gezielt aktiviert und deaktiviert werden kann - bspw. eingeschaltet oder ausgeschaltet werden kann. In solchen Ausführungsvarianten ist der Magnetaktor zumindest teilweise mit Elektromagneten ausgeführt. In weiteren Ausführungsvarianten ist der Magnetaktor so eingerichtet, dass die magnetische Kraft zumindest teilweise permanent wirkt. In solchen Ausführungsvarianten ist der Magnetaktor zumindest teilweise mit Permanentmagneten ausgeführt.

Die bauartbedingte magnetische Wirkrichtung des Magnetaktors ist bevorzugt durch die Anordnung der Magnete innerhalb des Magnetaktors vorgegeben. Eine Ausrichtung der magnetischen Wirkrichtung im Raum kann beeinflusst werden, indem die Ausrichtung des Magnetaktors mit dem Manipulator verändert wird. Mit der magnetischen Wirkrichtung ist die Richtung gemeint, entlang welcher eine Anziehung oder Abstoßung durch die magnetischen Kräfte erfolgt. Es ist nicht gesagt, dass in anderen Richtungen keine Wirkung des magnetischen Aktors erfolgt. Ein frei bewegliches gegenüberliegend zu dem Magnetaktor angeordnetes Metallteil, würde allerdings mit der magnetischen Wirkrichtung von dem Magnetaktor angezogen. Die magnetische Wirkrichtung kann bspw. als Hauptrichtungskomponente oder als mittlere Wirkrichtung der magnetischen Kräfte des Magnetaktors angesehen werden. Die magnetische Wirkrichtung ist bevorzugt parallel zu einer Achse, die durch den Nordpol und den Südpol eines Magneten verläuft.

Mit einem "Koppeln" des Förderguts an den Manipulator unter Verwendung der magnetischen Kraft ist gemeint, dass das Fördergut und der Manipulator durch die magnetische Kraft temporär zusammengehalten werden, so dass eine magnetische Kopplung von Fördergut und Manipulator entsteht. Durch eine Bewegung des Manipulators erfolgt auch eine Bewegung des Förderguts.

Es können verschiedene Vorgehensweisen implementiert sein, um ein Koppeln des Manipulators mit dem Fördergut zu erreichen, ohne dass hierbei Störungen auftreten. Eine unerwünschte Störung wäre beispielsweise, wenn bei der Annäherung des Magnetaktors an das Fördergut an einem bestimmten Punkt magnetische Kräfte auftreten, die eine unkontrollierte Bewegung des Förderguts relativ zu dem Manipulator bewirken. Solche Situationen können beispielsweise vermieden werden, in dem der Magnetaktor und die magnetische Kraft bspw. erst dann aktiviert wird, wenn der Magnetaktor sich in einer Koppelposition befindet. Eine andere Möglichkeit ist, dass der Manipulator so ausgeführt ist, dass er sich von einer Richtung aus bzw. mit einer besonderen Ausrichtung dem Fördergut nähert, in welcher keine oder nur geringe magnetische Kräfte auf das Fördergut wirken, bevor die Kopplung tatsächlich erfolgt ist. In weiteren Ausführungsvarianten sind Mittel vorgesehen, mit welchen das Fördergut in einer vorgesehenen Position gehalten wird, solange noch keine Koppelung des Förderguts mit dem Manipulator erfolgt ist.

Die Bewegung des Förderguts mit dem Manipulator und dem Magnetaktor im Barrieresystem hat gegenüber der manuellen Bewegung über Handschuheingriffe beachtliche Vorteile, weil eine automatisierte Prozessierung möglich wird.

Gegenüber dem Handling mit Robotern mit Greifern mit Greifpacken existieren ebenfalls beachtliche Vorteile, weil die Herstellung der Kopplung über magnetische Kräfte sehr schonend erfolgen kann und insbesondere keine mechanische Interaktion eines Greifers mit dem Fördergut Beschädigungen/Beeinträchtigungen des Förderguts bringen kann. Darüber hinaus sind Greifbacken eines Greifers (selbst wenn sie sich innerhalb des Barrieresystems befinden) immer ein Risiko für eine Kontamination der Barrieresystembedingungen, weil sich solche Greifbacken nacheinander in Kontakt mit einer Vielzahl von Fördergütern/Proben befinden.

Handschuheingriffe sind außerdem pharmazeutisch bedenklich, wenn das Fördergut bspw. ein Arzneimittel ist oder medizinische Proben umfasst. Mit der hier beschriebenen Vorrichtung kann erreicht werden, dass Handschuheingriffe auf ein Minimum reduziert oder sogar komplett eliminiert werden. Durch Handschuheingriffe können Partikel generiert werden, die den Innenraum vom Barrieresystem oder das Fördergut verunreinigen.

Die Besonderheit der hier beschriebenen Lösung ist die Anordnung des Manipulators mit dem Magnetaktor innerhalb des Barrieresystems. Von dieser Position aus kann mit dem Manipulator ein sehr effizientes Handling des Förderguts innerhalb des Barrieresystems erfolgen.

Durch die Anordnung des Manipulators mit dem Magnetaktor im Barrieresystem ist es insbesondere möglich magnetische Kräfte mit einem sehr kleinen Wirkabstand zum Fördergut zu verwenden. Aus diesem Grund müssen die magnetischen Kräfte des Magnetaktors nicht sehr groß sein. Magnetische Felder erstrecken sich bevorzugt nur durch die unmittelbare Umgebung des Magnetaktors.

Besonders vorteilhaft ist es, wenn der Manipulator dazu eingerichtet ist, das Fördergut mit einer Bewegungsrichtung zu bewegen, welche zumindest eine mit der magnetischen Wirkrichtung der magnetischen Kraft parallele Richtungskomponente aufweist.

Außerdem vorteilhaft ist es, wenn die magnetische Wirkrichtung der magnetischen Kraft und die Bewegungsrichtung des Förderguts parallel verlaufen.

So eine Anordnung ist abzugrenzen von einer Anordnung, bei welcher magnetische Kräfte nach Art eines Linearantriebs eingesetzt werden und bei welcher die Bewegungsrichtung senkrecht zur magnetischen Wirkrichtung angeordnet sind. Durch die Bewegung parallel zur magnetischen Wirkrichtung können verhältnismäßig kleine magnetische Kräfte genutzt werden, um eine starke/feste Kopplung zu erreichen. Außerdem ist (anders bei einem Linearantrieb) ein Abreißen der Kopplung stark erschwert, weil die Kopplung bevorzugt gegen einen mechanischen Anschlag erfolgt und Kopplungskräfte aus diesem Grund größer sein können als notwendig. Mit einem Anschlag ist hier gemeint, dass der Magnetaktor und das Fördergut bevorzugt aneinander anliegen und es eine mechanische Gegendruckkraft des Förderguts und des Magnetaktors zueinander gibt. Ein Zusammenspiel aus magnetischer Kraft und mechanischer Gegendruckkraft bewirkt, dass die mit der Vorrichtung hergestellte Kopplung robust gegenüber unterschiedlichen Widerstandskräften (Reibung etc.) beim Bewegen des Förderguts ist.

Darüber hinaus vorteilhaft ist es, wenn das Fördergut ein Material mit magnetischen Eigenschaften aufweist.

In solchen Ausführungsvarianten ist das Fördergut selbst magnetisch. Das Fördergut kann beispielsweise eine metallische Probe oder Ähnliches sein.

Außerdem vorteilhaft ist es, wenn das Fördergut einen Transportcontainer und/oder mindestens ein Behältnis für ein Material umfasst. Bevorzugt sind in dem Transportcontainer und/oder dem Behältnis Proben oder Ähnliches angeordnet. Besonders bevorzugt ist das Behältnis bzw. der Transportcontainer ein Träger für eine Vielzahl von Proben - bspw. für ein Probenarray. Transportcontainer werden regelmäßig auch als Formatteile bezeichnet. Sie können bspw. eine Vielzahl von Behältnissen aus Glas (bspw. kleine Petrischalen, Glasröhrchen etc.) beinhalten, die wiederum Proben beinhalten. Im Prinzip können alle Teile, die in einem Barrieresystem für die jeweilige durchzuführende Aufgabe benötigt werden, mit der hier beschriebenen Vorrichtung transportiert werden.

Darüber hinaus vorteilhaft ist es, wenn der Magnetaktor an einem Manipulatorkopf angeordnet ist, der um eine parallel zu der magnetischen Wirkrichtung ausgerichtete Drehachse drehbar ist.

Mit einem drehbaren Manipulatorkopf kann eine Winkelausrichtung des Manipulatorkopfes relativ zu der Drehachse einfach eingestellt werden. Bevorzugt existiert ein elektrischer Antrieb, um den Manipulatorkopf gezielt um die Drehachse herum zu drehen.

Das Fördergut weist ein Koppelelement mit magnetischen Eigenschaften auf.

Bevorzugt ist das Koppelelement an einem Behältnis oder Transportcontainer befestigt und für eine vorgesehene Interaktion mit dem Magnetaktor beim Koppeln eingerichtet. Besonders bevorzugt ist das Koppelement korrespondierend zu dem Magnetaktor ausgeführt, so dass beim Koppeln bestimmte vorgesehene Bereiche des Koppelelementes mit bestimmten vorgesehenen Bereichen des Magnetaktors in einer vorgesehenen Weise interagieren, um die Kopplung herzustellen.

Das Koppelement und der Magnetaktor weisen jeweils mindestens ein NordpolMagnetelement und mindestens ein Südpol-Magnetelement auf, wobei der Magnetaktor relativ zu dem Koppelement wahlweise in eine erste Ausrichtung oder eine zweite Ausrichtung bringbar ist, wobei in einer ersten Ausrichtung die Magnetelemente derart zusammenwirken, dass eine anziehende magnetische Kraft von dem Magnetaktor auf das Koppelement erzeugt wird und wobei in einer zweiten Ausrichtung die Magnetelemente derart zusammenwirken, dass eine abstoßende magnetische Kraft von dem Magnetaktor auf das Koppelelement erzeugt wird.

Darüber hinaus vorteilhaft ist es, wenn zusätzlich zu der ersten Ausrichtung und der zweiten Ausrichtung noch eine dritte Ausrichtung vorgesehen ist, in der sowohl anziehende magnetische Kräfte als auch abstoßende magnetische Kräfte derart zusammenwirken, dass keine resultierende Kraft von dem Magnetaktor auf das Koppelement auftritt.

Außerdem vorteilhaft ist es, wenn auf einer um eine Drehachse des Magnetaktors umlaufenden Bahn abwechselnd Nordpolmagnetelemente und Südpolmagnetelemente angeordnet sind, so dass durch eine Drehung des Magnetaktors um die Drehachse wahlweise eine erste Ausrichtung oder eine zweite Ausrichtung des Magnetaktors relativ zu dem Koppelelement herstellbar ist.

Bevorzugt existieren an dem Koppelelement und dem Magnetaktor sich jeweils entsprechende Anordnungen von Nordpolmagnetelementen und Südpolmagnetelementen.

Jedes Nordpolmagnetelement und jedes Südpolmagnetelement hat bevorzugt selbst jeweils Nordpol und Südpol. Die Bezeichnung "Nordpolmagnetelement" bzw. "Südpolmagnetelement" ist bevorzugt gewählt, wenn der Nordpol bzw. der Südpol hin zu der Oberfläche ausgerichtet sind, an welcher der Magnetaktor mit dem Fördergut (insbesondere mit dem Koppelelement) gekoppelt ist. Der jeweils andere Pol des Magnetelements ist bevorzugt gegenüberliegend hierzu angeordnet.

Die beschriebene Anordnung mit Nordpolmagnetelementen und Südpolmagnetelementen ist bevorzugt besonders geeignet, um eine sichere Kopplung zwischen dem Magnetaktor und dem Koppelelement herzustellen.

Darüber hinaus vorteilhaft ist es, wenn der Manipulator in dem Barrieresystem gegenüberliegend zu einem Andockport angeordnet ist, wobei an den Andockport eine Transfervorrichtung zum Transport des Förderguts in das Barrieresystem anschließbar ist und der Andockport zur Ausbildung eines nach außen hin als abgedichteter Durchgang von der Transfervorrichtung in das Barrieresystem eingerichtet ist, wobei das Fördergut mit dem Magnetaktor aus der Transfervorrichtung durch den Durchgang in den Andockport und das Barrieresystem transportierbar ist.

Die Transfervorrichtung bildet bevorzugt einen eigenen kleines Barrieresystem. Die Transfervorrichtung bildet zusammen mit dem Barrieresystem bevorzugt ein Gesamtsystem, mit welchem ein Einbringen und Ausbringen von Fördergütern in das Barrieresystem unter Barrieresystembedingungen möglich ist. Ein Innenraum der Transfervorrichtung wird bevorzugt steril zur Verfügung gestellt. Durch den Anschluss an das Barrieresystem stellen sich bevorzugt die Bedingungen im Barrieresystem (bspw. Reinraumbedingungen) auch in der Transfervorrichtung ein. Vor dem Abkoppeln der Transfervorrichtung von dem Barrieresystem wird die Transfervorrichtung bevorzugt hermetisch verschlossen, so dass die Bedingungen im Barrieresystem (bspw. Reinraumbedingungen) auch in der Transfervorrichtung aufrecht erhalten bleiben.

Die Transfervorrichtung kann bevorzugt an einen Andockport des Barrieresystems angedockt werden. Die Transfervorrichtung und der Andockport bilden bevorzugt eine umlaufende abgedichtete Verbindung, innerhalb derer ein abgedichteter Durchgang hergestellt werden kann.

Außerdem vorteilhaft ist es, wenn der Andockport eine erste Tür aufweist, die den Andockport verschließt und wobei die Transfervorrichtung eine zweite Tür aufweist, die die Transfervorrichtung verschließt, wobei der Andockport dazu eingerichtet ist, derart mit der Transfervorrichtung zusammenzuwirken, dass die erste Tür und die zweite Tür geöffnet werden, wenn der nach außen hin abgedichtete Durchgang von der Transfervorrichtung in den Andockport und das Barrieresystem eingerichtet ist.

Die Transfervorrichtung ist bevorzugt klein im Verhältnis zum Barrieresystem. Dies bezieht sich insbesondere auf ein Innenvolumen der Transfervorrichtung und des Barrieresystems. Ein abgedichteter Durchgang von dem Barrieresystem (durch den Andockport) in die Transfervorrichtung hat bevorzugt einen relativ kleinen Querschnitt, welcher bspw. zu zumindest 50 Prozent (bevorzugt sogar zumindest 80 Prozent) ausgefüllt ist, wenn das Fördergut aus der Transfervorrichtung heraus in das Barrieresystem gefördert wird. Die Bewegung des Förderguts aus der Transfervorrichtung heraus mit der Bewegungsrichtung erfolgt bevorzugt mit der magnetischen Wirkrichtung des Magnetaktors, die parallel zu der Bewegungsrichtung ist. Durch die Verwendung eines Magnetaktors mit einer derartigen Ausrichtung der magnetischen Wirkrichtung kann der Magnetaktor an einer stirnflächigen Seite aus an dem Fördergut ankoppeln und benötigt keinen zusätzlichen Platz, wie dies bspw. bei einem Greifer der Fall wäre, der das Fördergut umgreifen müsste. Aus diesem Grund können im Verhältnis zur Transfervorrichtung besonders große Fördergüter mit der hier beschriebenen Vorrichtung prozessiert werden.

Ein weiterer Vorteil eines Magnetaktors mit einer derartigen Ausrichtung der magnetischen Wirkrichtung ist, dass durch den Magnetaktor an der stirnseitigen Fläche nicht in die Transfervorrichtung hineingefahren werden muss. Dies ist besonders dann von Vorteil, wenn die Transfervorrichtung eine andere Reinraumklasse aufweist. Dies ist normalerweise nicht bei RTP Portsystemen der Fall, sondern eher bei einem Einlauf oder Auslaufschott, durch die ein Standard- Materialfluss während der Produktion stattfindet. Zutransport von leeren Packmitteln/ Behältnisse und Abtransport von befüllten Packmitteln/ Behältnissen oder auch Reject Objekte.

Solche Einlauf- oder Auslaufschotts sind häufig nicht vollständig verschlossen wie dies bei der hier beschriebenen Transfervorrichtung und deren Anschluss an das Barrieresystem der Fall ist. Häufig wird bei solchen Einlauf- oder Auslaufschotts ein Schutz vor Kontamination des Barrieresystems durch einen Überdruck im Inneren des Barrieresystems (im Falle eines Reinraums) oder durch einen Unterdruck im Inneren des Barrieresystems (im Falle eines Systems zum Handling von kontaminierten Proben/Produkten) verwendet. Während ein klassischer Greifer ein Objekt umgreifen muss und so zumindest abschnittsweise aus einem Einlauf- oder Auslaufschott hinausragt bzw. mit dem Objekt innerhalb des Einlauf- oder Auslaufschotts überlappt, kann mit dem hier beschriebenen Magnetaktor erreicht werden, dass der Kontakt zwischen dem Objekt und dem Magnetaktor nur in einer einzigen Ebene stattfindet. So ist der Schutz vor Kontamination durch die Verwendung des hier beschriebenen Aktors in Verbindung mit einem Einlauf- oder Auslaufschott erheblich verbessert.

Bevorzugt existiert eine Führung, die bei erfolgter Herstellung des abgedichteten Durchgangs eine Führung des Förderguts von der Transfervorrichtung in das Barrieresystem ermöglicht. Diese Führung kann beispielsweise Führungsschienen umfassen, die aus der Transfervorrichtung durch den Durchgang in das Barrieresystem ausgefahren werden oder umgekehrt.

Durch die hier beschriebene Vorrichtung kann auch erreicht werden, dass das Fördergut in die richtige Position gebracht wird, wenn es aus der Transfervorrichtung entnommen wird. Für den bevorzugten Fall, dass das Fördergut ein Behältnis oder Transportcontainer ist, kann damit ein automatisierter Entladevorgang durchgeführt werden.

Die Positionierung zwischen Magnetaktor und Fördergut bzw. Behältnis oder Transportcontainer bei der hier beschriebenen Vorrichtung verkraftet wesentlich mehr Ungenauigkeiten bezüglich der Positionierung, als zum Beispiel bei einer Verbindung mittels Formschluss mit einem Greifer. Wenn die Ausrichtung nicht exakt passt, ist das System nicht überbestimmt, kann insbesondere kein Verklemmen erfolgen.

Wie ausgeführt wirkt die Magnetkraft in Bewegungsrichtung. Ein weiterer Vorteil dieser Ausrichtung ist, dass ein Spiel in einer Führung bei dieser Ausrichtung eine Auswirkung auf einen Luftspalt des Magneten hat. Dies wirkt sich wiederum positiv auf die Prozesssicherheit aus. Durch die Wirkrichtung der Magnete in Bewegungsrichtung erfolgt insbesondere keine Anziehung, die einen Reibwiederstand gegen eine Bewegung des Förderguts erhöht.

Ein wesentliches Merkmal der hier beschriebenen Vorrichtung ist also, dass mittels Magnetkraft das Fördergut (hier ein Behältnis oder Transportcontainer mit Proben) in das Barrieresystem gezogen werden. Die Linearbewegung vom Fördergut kann mit dem Manipulator automatisiert durchgeführt werden. Magnete müssen nicht unbedingt am Magnetaktor angeordnet sein. Es ist auch möglich, dass lediglich ein an dem Fördergut angeordnetes Koppelelement mit Magnetelementen existiert, welches mit magnetisierbaren Elementen an dem Magnetaktor interagiert, um das Fördergut an den Magnetaktor zu koppeln. Magnetelemente können in den Magnetaktor und/oder das Koppelelement eingeschweißt, eingepresst, eingegossen, eingeklebt oder eingeschraubt sein. Wenn das Fördergut ein Behältnis für Proben ist, kann (nachdem das Fördergut in das Barrieresystem gezogen wurde) eine Entnahme von Proben bzw. ein Entladen oder Beladen des Behältnisses oder Transportcontainers erfolgen.

In bevorzugten Ausführungsvarianten erfolgt durch ein Drehen des Magnetaktors ein An- und Abkoppeln des Förderguts. Ist der Ent- oder Beladevorgang abgeschlossen, wird das Fördergut bzw. das Behältnis oder der Transportcontainer bevorzugt in die Transfervorrichtung zurückgeschoben. Hierfür kann der Effekt genutzt werden, dass sich gleiche Magnetpole abstoßen. Dazu werden bevorzugt die Magnete an dem Fördergut und an dem Magnetaktor so angeordnet, dass Nordpol und Nordpol und Südpol und Südpol gegenüberstehen. Dies kann bei einem Magnetaktor bzw. einem Koppelelement mit jeweils zwei Nordpolmagnetelementen und zwei Südpolmagnetelementen erreicht werden, in dem der Magnetaktor ausgehend von einer Ausrichtung, in welcher sich Nordpolmagnetelemente und Südpolmagnetelemente gegenseitig anziehen, um 90° gedreht wird und in eine Ausrichtung gebracht wird, in welcher sich Nordpolmagnetelemente und Südpolmagnetelemente gegenseitig abstoßen. Die Anzahl und Größe der Nordpolmagnetelemente und Südpolmagnetelemente kann je nach benötigter Magnetkraft und verfügbarem Bauraum flexibel gewählt werden. Die minimale Anzahl ist genau ein Magnet an dem Magnetaktor und/oder an dem Kopplungselement sowie ein mit dem Magneten magnetisch zusammenwirkendes Material an dem jeweiligen anderen Element (Kopplungselement oder Magnetaktor). Eine weitere Ausführungsvariante ist ein Magnet auf jeder Seite (an dem Magnetaktor und dem Kopplungselement). Durch die gegenseitige Polung können höhere Kräfte erreicht werden, wodurch schwere Fördergüter aus Transfervorrichtungen herausgezogen werden können. Durch eine Drehung des Magnetaktors kann die Wirkkraft der Magnetelemente ggf. stufenlos reduziert werden. Bevorzugt existiert eine neutrale Stellung, in welcher sich anziehende und abstoßende Magnetkräfte zwischen dem Magnetaktor und dem Kopplungselement gegenseitig aufheben.

Durch eine automatisierte Bewegung des Förderguts ist kein Bedienereingriff notwendig. Dadurch ist die Fehlerquelle Bediener ausgeschlossen. Es ist sichergestellt, dass das Fördergut automatisiert in die gewünschte, exakt definierte Position gebracht worden ist. Dies ist speziell bei einem automatisierten Entladevorgang und Beladevorgang eines Transportcontainers als Fördergut durch ein weiteres Handling-System zum Handling von in dem Transportcontainer angeordneten Proben Voraussetzung für einen prozesssicheren Ablauf.

Um die Positionierungsgenauigkeit des Förderguts bzw. eines Behältnisses oder eines Transportcontainers als Fördergut in das Barrieresystem zu verbessen, kann am Einschub ein Zentrierhilfe angebracht werden. Diese Zentrierhilfe kann beispielsweise aus einem Zentrierbolzen und einer Zentrierhülse bestehen.

Es soll darauf hingewiesen werden, dass die im Zusammenhang mit der vorstehend beschriebenen Vorrichtung geschilderten besonderen Vorteile und Ausgestaltungsmerkmale auch auf das Barrieresystem anwendbar und übertragbar sind.

Das Barrieresystem kann insbesondere alle im Zusammenhang mit der beschriebenen Vorrichtung vorgestellten Merkmale aufweisen und bildet gegebenenfalls eine übergeordnete Einheit zu der beschriebenen Vorrichtung. Es ist auch möglich, dass sowohl das Barrieresystem als auch die Vorrichtung beide Bestandteile eines (übergeordneten) Prozessierungsystems für Produkte und/oder Proben bilden. Gegebenenfalls ist dabei eine klare Abgrenzung zwischen Merkmalen des Barrieresystems und der Vorrichtung gar nicht möglich. Oder in anderen Worten: Bestimmte Merkmale können sowohl einen Bestandteil des Barrieresystems als auch der Vorrichtung bilden. Hierzu zählt beispielsweise der Andockport, der ein Teil des Barrieresystems bildet und gleichzeitig auch einen Teil der Vorrichtung, in dem er mit dem Manipulator wie weiter vorne beschrieben zusammenwirkt.

Das Barrieresystem ist für pharmazeutische Anwendungen geeignet. Bei dem Barrieresystem liegt ein besonderer Fokus darauf, dass aus dem Barrieresystem heraus nicht unerwünscht Stoffe austreten dürfen. Insbesondere für pharmazeutische Anwendungen liegt ein besonderer Fokus bei Barrieresystemen darauf in diese Richtung zu wirken, denn pharmazeutische Stoffe sollen aus verschiedenen Gründen nicht unerwünscht in die Umwelt gelangen und dort eine Kontamination bewirken. Dies ist ein Unterschied zu reinen Reinraum-Barrieresystemen, bei denen davon ausgegangen werden kann, dass die im Inneren des Barrieresystems prozessierten Produkte/Proben ohnehin rein sind und von ihnen ausgehend keine Kontaminationen entstehen können. Bei solchen reinen Reinraum-Barrieresystemen liegt der Fokus zumeist überwiegend darauf, das Eindringen von Verunreinigungen/Kontaminationen in das Barrieresystem zu unterbinden.

Das Barrieresystem kann vorzugsweise auch so eingerichtet sein, dass es bidirektional wirkt, so dass sowohl eine Kontamination von in dem Barrieresystem prozessierten Produkten/Proben durch die Umgebung verhindert ist als auch eine Kontamination der Umgebung durch in dem Barrieresystem prozessierte Produkten/Proben.

Je nach Anwendungsfall kann das Barrieresystem zur Verarbeitung/Prozessierung von pharmazeutischen Produkten und/oder zur Verarbeitung/Prozessierung von Proben verwendet werden. Hierbei ist die Verarbeitung/Prozessierung von Proben im Laborbetrieb zu Forschungszwecken oder zu anderen Zwecken als Forschung (bspw. Klinik) umfasst.

Die Erfindung sowie das technische Umfeld der Erfindung werden nachfolgend anhand der Figuren näher erläutert. Die Figuren zeigen bevorzugte Ausführungsbeispiele, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen:
Fig. 1: eine schematische Darstellung einer beschriebenen Vorrichtung, und
Fig. 2: eine Ansicht von vorne auf einen Magnetaktor einer beschriebenen Vorrichtung.

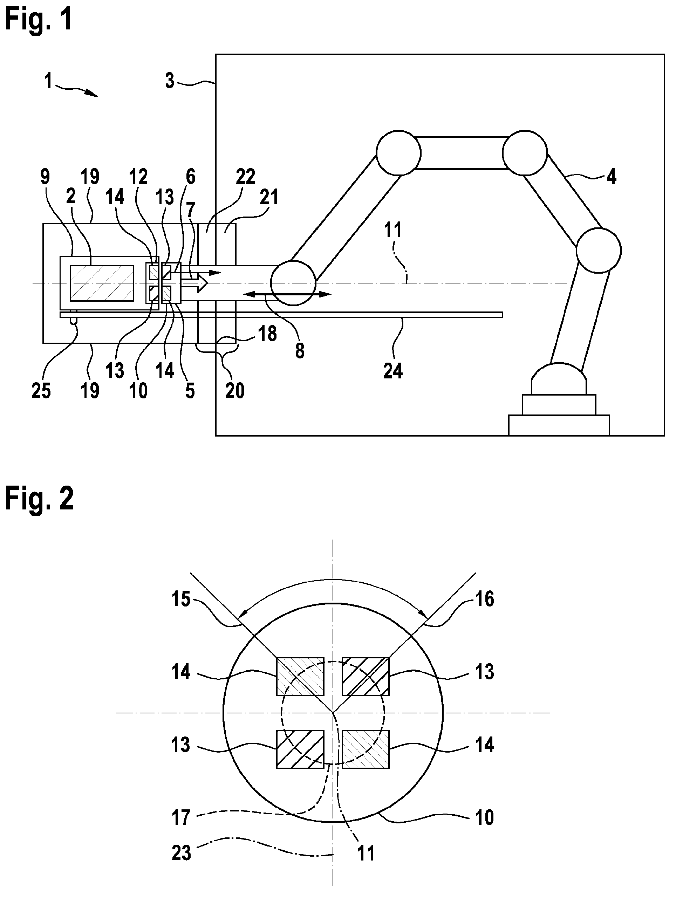

Fig. 1 zeigt eine beschriebene Vorrichtung 1 mit einem Barrieresystem 3 sowie einen in dem Barrieresystem 3 angeordneten Manipulator 4. Der Manipulator 4 ist vorzugsweise elektrisch angetrieben und dazu eingerichtet innerhalb des Barrieresystems 3 den Transport und die Verarbeitung eines Förderguts 2 durchzuführen. Das Fördergut 2 kann beispielsweise eine Probe oder ein Probenarray, bestehend aus einer Vielzahl von Einzelproben sein, die in dem Barrieresystem 3 einer speziellen Untersuchung oder Behandlung unterzogen werden. In der schematischen Fig. 1 sind Mittel zur Durchführung von Untersuchungen und Behandlungen der Probe nicht dargestellt.

Das Fördergut 2 kann bevorzugt mit einer Transfervorrichtung 19 in das Barrieresystem 3 eingebracht werden. Die Transfervorrichtung 19 ist bevorzugt ein abgeschlossener Raum, welcher für den Transport des Förderguts 2 hermetisch abgeschlossen werden kann, um die Reinheit des Förderguts 2 aufrecht zu erhalten. Die Transfervorrichtung 19 bildet bevorzugt selbst eine Art Barrieresystem. Die Transfervorrichtung 19 kann bevorzugt an einen Andockport 18 des Barrieresystems 3 derart abgeschlossen sein, dass ein nach außen hin (außerhalb des Barrieresystems 3) abgedichteter Durchgang 20 herstellbar ist, durch welchen das Fördergut 2 aus der Transfervorrichtung 19 in das Barrieresystem 3 überführt werden kann. Die Transfervorrichtung 19 ist insbesondere dazu geeignet Fördergüter von einem Barrieresystem 3 in ein anderes Barrieresystem 3 zu transportieren, wobei dann beide Reinräume 3 jeweils einen beschriebenen Andockport 18 aufweisen, der Andockport 18 des Barrieresystems 3 hat bevorzugt eine erste Tür 21, mit welcher der Andockport 18 verschließbar ist, wenn keine Transfervorrichtung 19 daran angeschlossen ist. Die Transfervorrichtung 19 hat bevorzugt eine zweite Tür 22, mit welcher die Transfervorrichtung 19 verschlossen werden kann, wenn die Transfervorrichtung 19 nicht an einen Andockport 18 eines Barrieresystems 3 angeschlossen ist. Die Transfervorrichtung 19 und der Andockport 18 wirken bevorzugt so zusammen, dass die erste Tür 21 und die zweite Tür 22 geöffnet werden, wenn der abgedichtete Durchgang 20 von der Transfervorrichtung 19 in den Andockport 18 und das Barrieresystem 3 hergestellt ist. Bevorzugt erfolgt beim Anschluss der Transvorvorrichtung 19 an den Andockport 18 eine Kopplung der ersten Tür 21 und der zweiten Tür 22, so dass beide Türen 21,22 gemeinsam geöffnet werden können. Wenn die Transfervorrichtung 19 und der Andockport 18 dicht miteinander verbunden sind, erfolgt bevorzugt automatisch eine Öffnung der Türen 21,22, indem ein Türöffnungsmechanismus in Gang gesetzt wird.

Das Fördergut 2 ist bevorzugt in einem Transportcontainer 9 aufgehoben mit welchem das Fördergut 2 transportiert werden kann

Der Manipulator 4 hat bevorzugt einen Manipulatorkopf 10 mit einem Magnetaktor 5. Besonders bevorzugt ist der Magnetaktor 5 mit dem Manipulatorkopf 10 um die Drehachse 11 drehbar. Das Transportcontainer 9 für das Fördergut 2 hat bevorzugt ein Koppelement 12. Der Magnetaktor 5 ist dazu ausgeführt an das Koppelement 12 anzukoppeln, um dann den Transportcontainer 9 und das Fördergut 2 mit dem Manipulator 4 zu bewegen. Der Magnetaktor 5 und das Koppelelement 12 weisen bevorzugt Magnetelemente 13, 14 auf, wobei bevorzugt sowohl der Magnetaktor 5 als auch das Koppelement 12 jeweils Nordpolmagnetelemente 13 und Südpolmagnetelemente 14 aufweisen. Wobei jeweils Nordpolmagnetelemente 13 des Magnetaktors 5 Südpolmagnetelementen 14 des Koppelementes 12 anziehen und umgekehrt. Das Zusammenwirken von Nordpolmagnetelementen 13 und Südpolmagnetelementen 14 des Magnetaktors 5 und des Koppelelementes 12 wird nachfolgend noch näher anhand von Fig. 2 beschrieben. Eine anziehende magnetische Kraft 7 oder eine abstoßende magnetische Kraft 7 zwischen dem Magnetaktor 5 und dem Koppelelement 12 wirkt mit einer magnetischen Wirkrichtung 6. Die Vorrichtung 1 ist, insbesondere der Manipulator 4 der Vorrichtung 1, ist bevorzugt dazu eingerichtet, eine Bewegung des Förderguts 2 bzw. des Transportcontainers 9 in einer Bewegungsrichtung 8 zu bewirken, welche zumindest eine mit der magnetischen Wirkrichtung 6 parallele Richtungskomponente aufweist. In der Fig. 1 ist eine Ausführungsvariante dargestellt, bei welcher die Bewegungsrichtung 8 des Förderguts 2 bzw. des Transportcontainers 9 parallel zur magnetischen Wirkrichtung 6 ist.

Ein bevorzugter Aufbau des Magnetaktors 5 wird anhand von Fig. 2 erläutert. Fig. 2 zeigt den Magnetaktor 5 in einer Ansicht von vorne, die in Fig. 1 mit der Blickrichtung A dargestellt ist. Der Magnetaktor 5 ist bevorzugt um eine Drehachse 11 drehbar, die in Fig. 1 und in Fig.2 dargestellt ist. Der Magnetaktor 5 weist bevorzugt eine gerade Anzahl von Nordpolmagnetelementen 13 sowie eine gerade Anzahl von Südpolmagnetelementen 14 auf, die hier in einer umlaufenden Bahn 17 um die Drehachse 11 herum verteilt angeordnet sind. In der Ausführungsvariante gemäß Fig. 2 sind genau zwei Nordpolmagnetelemente 13 und zwei Südpolmagnetelemente 14 ausgeführt.

Der Magnetaktor 5 ist zum Zusammenwirken mit einem Koppelement 12 ausgeführt, welches eine Anordnung von Nordpolmagnetelementen 13 und Südpolmagnetelementen 14 hat, die der in Fig. 2 gezeigten Anordnung beim Magnetaktor 5 entspricht. Ein Grad der Überlappung bzw. des Aufeinanderliegens von Nordpolmagnetelementen 13 und Südpolmagnetelementen 14 des Magnetaktors 5 und des Koppelementes 12 hängt von der Winkelausrichtung des Magnetaktors 5 und des Koppelements 12 relativ zur Drehachse ab. Durch eine Drehung des Magnetaktors 5 kann dieser Grad der Überlappung bzw. des Aufeinanderliegens gezielt eingestellt werden. Es kann eine erste Ausrichtung 15 eingestellt werden, bei welcher die Nordpolmagnetelemente 13 des Magnetaktors 5 jeweils genau gegenüber von Südpolmagnetelementen 14 des Koppelementes 12 angeordnet sind und umgekehrt, so dass eine (maximale) Anziehung zwischen dem Magnetaktor 5 und dem Koppelelement 12 erreicht wird. Es kann eine zweite Ausrichtung 16 eingestellt werden, bei welcher die Nordpolmagnetelemente 13 des Magnetaktors 5 jeweils genau gegenüber von Nordpolmagnetelementen 13 des Koppelementes 12 angeordnet sind, wobei das gleiche dann für Südpolmagnetelemente 14 gilt, so dass eine (maximale) Abstoßung zwischen dem Magnetaktor 5 und dem Koppelelement 12 erreicht wird. Bevorzugt kann auch eine dritte Ausrichtung 23 eingestellt werden, in welcher sich abstoßende Kräfte und anziehende Kräfte zwischen dem Magnetaktor 5 und dem Koppelelement 12 gegenseitig ausgleichen, so dass der Magnetaktor 5 bewegt werden kann, ohne dass dies relevante Auswirkungen auf das Koppelement 12 hat. Der Magnetaktor 5 kann bevorzugt in eine solche dritte Ausrichtung 23 gebracht werden, um den Magnetaktor 5 von dem Koppelelement 12 zu lösen und/oder den Magnetaktor 5 an das Koppelement 12 anzunähern oder von dem Koppelement 12 zu entfernen, ohne dass unkontrollierte Auswirkungen der magnetischen Kräfte auftreten, die bspw. eine plötzliche nicht gewollte Anziehung oder Abstoßung des Koppelelementes 12 sein könnten.

Es kann auftreten, dass durch Drehungen des Magnetaktors 5 um die Drehachse 11 mechanische Momente auf das Koppelelement 12 hervorgerufen werden. Solche mechanischen Momente können bspw. ein Verkippen eines Transportcontainers 9 für das Fördergut 2 bewirken. Um solchen mechanischen Momenten bei einer Drehung des Magnetaktors 5 entgegenzuwirken, existiert ggf. eine Führung 24 für den Transportcontainer 9 bzw. das Fördergut 2, welche in Fig. 1 schematisch dargestellt ist. Eine solche Führung kann im Barrieresystem 3 angeordnet sein und nach der Herstellung des abgedichteten Durchgangs 20 in die Transfervorrichtung 19 ausfahren oder umgekehrt. Bevorzugt wird der Transportcontainer 9 bzw. das Fördergut 2 bei der Bewegung aus der Transfervorrichtung 19 heraus bzw. in die Transfervorrichtung 19 hinein mit einer solchen Führung 24 geführt. Die Führung 24 kann bspw. mit einem Führungsbolzen 25 an dem Transportcontainer 9 zusammenwirken, welcher in der Führung 24 wie in einer Schiene läuft und dazu eingerichtet ist, mechanische Momente aufzunehmen, die durch eine Drehung des Magnetaktors 5 um die Drehachse 11 entstehen.

### Bezugszeichenliste

- 1: Vorrichtung
- 2: Fördergut
- 3: Barrieresystem
- 4: Manipulator
- 5: Magnetaktor
- 6: magnetische Wirkrichtung
- 7: magnetische Kraft
- 8: Bewegungsrichtung
- 9: Transportcontainer
- 10: Manipulatorkopf
- 11: Drehachse
- 12: Koppelelement
- 13: Nordpolmagnetelement
- 14: Südpolmagnetelement
- 15: erste Ausrichtung
- 16: zweite Ausrichtung
- 17: umlaufende Bahn
- 18: Andockport
- 19: Transfervorrichtung
- 20: Durchgang
- 21: erste Tür
- 22: zweite Tür
- 23: dritte Ausrichtung
- 24: Führung
- 25: Führungsbolzen

## Patentansprüche

1. Barrieresystem (3) zur Prozessierung von pharmazeutischen Produkten als Fördergut (2) aufweisend eine Vorrichtung (1) zur Handhabung von Fördergut (2) innerhalb des Barrieresystems (3), aufweisend einen in dem Barrieresystem (3) angeordneten Manipulator (4) mit einem Magnetaktor (5) zur Aufbringung einer magnetischen Kraft (6) auf das Fördergut (2), welcher eine bauartbedingte magnetische Wirkrichtung (6) der magnetischen Kraft (7) aufweist, wobei der Manipulator (4) innerhalb des Barrieresystems (3) angeordnet ist und dazu eingerichtet ist, das Fördergut (2) mit der magnetischen Kraft (7) an den Manipulator (4) zu koppeln und mit dem Manipulator (4) innerhalb des Barrieresystems (3) zu bewegen, wobei das Fördergut ein Koppelelement (12) mit magnetischen Eigenschaften aufweist, **dadurch gekennzeichnet, dass** das Koppelement (12) und der Magnetaktor (5) jeweils mindestens ein Nordpolmagnetelement (13) und mindestens ein Südpolmagnetelement (14) aufweisen, wobei der Magnetaktor (5) relativ zu dem Koppelement (12) wahlweise in eine erste Ausrichtung (15) oder eine zweite Ausrichtung (16) bringbar ist, wobei in einer ersten Ausrichtung (15) die Magnetelemente (13,14) derart zusammenwirken, dass eine anziehende magnetische Kraft (7) von dem Magnetaktor (5) auf das Koppelement (12) erzeugt wird und wobei in einer zweiten Ausrichtung (15) die Magnetelemente (13,14) derart zusammenwirken, dass eine abstoßende magnetische Kraft (7) von dem Magnetaktor (5) auf das Koppelelement (12) erzeugt wird.

2. Barrieresystem (3) nach Anspruch 1, wobei der Magnetaktor (5) mindestens einen Elektromagneten aufweist.

3. Barrieresystem (3) nach Anspruch 1 oder 2, wobei der Manipulator (4) dazu eingerichtet ist, das Fördergut (2) mit einer Bewegungsrichtung (8) zu bewegen, welche zumindest eine mit der magnetischen Wirkrichtung (6) der magnetischen Kraft (7) parallele Richtungskomponente aufweist.

4. Barrieresystem (3) nach Anspruch 3, wobei die magnetische Wirkrichtung (6) der magnetischen Kraft (7) und die Bewegungsrichtung (8) des Förderguts (2) parallel verlaufen.

5. Barrieresystem (3) nach einem der Ansprüche 1 bis 4, wobei das Fördergut (2) ein Material mit magnetischen Eigenschaften aufweist.

6. Barrieresystem (3) nach einem der Ansprüche 1 bis 4, wobei das Fördergut (2) ein Transportcontainer (9) für ein Material ist.

7. Barrieresystem (3) nach einem der vorhergehenden Ansprüche, wobei der Magnetaktor (5) an einem Manipulatorkopf (10) angeordnet ist, der um eine parallel zu der magnetischen Wirkrichtung (6) ausgerichtete Drehachse (11) drehbar ist.

8. Barrieresystem (3) nach einem der vorhergehenden Ansprüche, wobei zusätzlich zu der ersten Ausrichtung (15) und der zweiten Ausrichtung (16) noch eine dritte Ausrichtung (23) vorgesehen ist, in der sowohl anziehende magnetische Kräfte (7) als auch abstoßende magnetische Kräfte (7) derart zusammenwirken, dass keine resultierende Kraft von dem Magnetaktor (5) auf das Koppelement (12) auftritt.

9. Barrieresystem (3) nach einem der vorhergehenden Ansprüche, wobei auf einer um eine Drehachse (11) des Magnetaktors (5) umlaufenden Bahn (17) abwechselnd Nordpolmagnetelemente (13) und Südpolmagnetelemente (14) angeordnet sind, so dass durch eine Drehung des Magnetaktors (5) um die Drehachse wahlweise eine erste Ausrichtung oder eine zweite Ausrichtung des Magnetaktors (5) relativ zu dem Koppelement herstellbar ist.

10. Barrieresystem (3) nach einem der vorhergehenden Ansprüche, wobei der Manipulator (4) in dem Barrieresystem (3) gegenüberliegend zu einem Andockport (18) angeordnet ist, wobei an den Andockport (18) eine Transfervorrichtung (19) zum Transport des Förderguts (2) in das Barrieresystem (3) anschließbar ist und der Andockport (18) zur Ausbildung eines nach außen hin abgedichteten Durchgangs (20) von der Transfervorrichtung (19) in das Barrieresystem (3) eingerichtet ist, wobei das Fördergut (2) mit dem Magnetaktor (5) aus der Transfervorrichtung (19) durch den Durchgang (20) in den Andockport (18) und das Barrieresystem (3) transportierbar ist.

11. Barrieresystem (3) nach Anspruch 10, wobei der Andockport (18) eine erste Tür (21) aufweist, die den Andockport (18) verschließt und wobei die Transfervorrichtung (19) eine zweite Tür (22) aufweist, die die Transfervorrichtung (19) verschließt, wobei der Andockport (18) dazu eingerichtet ist derart mit der Transfervorrichtung (19) zusammenzuwirken, dass die erste Tür (21) und die zweite Tür (22) geöffnet werden, wenn der nach au-βen hin abgedichtete Durchgang (20) von der Transfervorrichtung (19) in den Andockport (18) und das Barrieresystem (3) eingerichtet ist.

## Claims

1. Barrier system (3) for processing pharmaceutical products as material to be conveyed (2), comprising a device (1) for handling material to be conveyed (2) within the barrier system (3), which device comprises a manipulator (4) which is arranged in the barrier system (3) and which has a magnetic actuator (5) for applying a magnetic force (6) to the material to be conveyed (2), which magnetic actuator has a design-related magnetic direction of action (6) of the magnetic force (7), wherein the manipulator (4) is arranged within the barrier system (3) and is designed to couple the material to be conveyed (2) to the manipulator (4) by means of the magnetic force (7) and to move the material to be conveyed within the barrier system (3) by means of the manipulator (4), wherein the material to be conveyed comprises a coupling element (12) having magnetic properties, **characterized in that**
the coupling element (12) and the magnetic actuator (5) each have at least one north pole magnetic element (13) and at least one south pole magnetic element (14), wherein the magnetic actuator (5) can be selectively brought into a first orientation (15) or into a second orientation (16), relative to the coupling element (12), wherein, in a first orientation (15), the magnetic elements (13, 14) interact such that an attractive magnetic force (7) is generated by the magnetic actuator (5) on the coupling element (12) and wherein, in a second orientation (15), the magnetic elements (13, 14) interact such that a repulsive magnetic force (7) is generated by the magnetic actuator (5) on the coupling element (12).

2. Barrier system (3) according to claim 1, wherein the magnetic actuator (5) comprises at least one electromagnet.

3. Barrier system (3) according to claim 1 or 2, wherein the manipulator (4) is designed to move the material to be conveyed (2) in a movement direction (8) which has at least one direction component parallel to the magnetic direction of action (6) of the magnetic force (7).

4. Barrier system (3) according to claim 3, wherein the magnetic direction of action (6) of the magnetic force (7) and the movement direction (8) of the material to be conveyed (2) extended in parallel.

5. Barrier system (3) according to any of claims 1 to 4, wherein the material to be conveyed (2) comprises a material having magnetic properties.

6. Barrier system (3) according to any of claims 1 to 4, wherein the material to be conveyed (2) is a transport container (9) for a material.

7. Barrier system (3) according to any of the preceding claims, wherein the magnetic actuator (5) is arranged on a manipulator head (10) which is rotatable about an axis of rotation (11) oriented parallel to the magnetic direction of action (6).

8. Barrier system (3) according to any of the preceding claims, wherein, in addition to the first orientation (15) and to the second orientation (16), a third orientation (23) is provided in which attractive magnetic forces (7) and repulsive magnetic forces (7) interact such that no resultant force from the magnetic actuator (5) on the coupling element (12) occurs.

9. Barrier system (3) according to any of the preceding claims, wherein north pole magnetic elements (13) and south pole magnetic elements (14) are arranged alternately on a path (17) surrounding an axis of rotation (11) of the magnetic actuator (5), so that, by a rotation of the magnetic actuator (5) about the axis of rotation, a first orientation or a second orientation of the magnetic actuator (5) relative to the coupling element can selectively be produced.

10. Barrier system (3) according to any of the preceding claims, wherein the manipulator (4) is arranged in the barrier system (3) opposite a docking port (18), wherein a transfer device (19) for transporting the material to be conveyed (2) into the barrier system (3) can be connected to the docking port (18), and the docking port (18) is designed to form a passage (20), which is sealed from the outside, from the transfer device (19) into the barrier system (3), wherein the material to be conveyed (2) can be transported from the transfer device (19) through the passage (20) into the docking port (18) and the barrier system (3) by means of the magnetic actuator (5).

11. Barrier system (3) according to claim 10, wherein the docking port (18) has a first door (21) which closes the docking port (18) and wherein the transfer device (19) has a second door (22) which closes the transfer device (19), wherein the docking port (18) is designed to interact with the transfer device (19) such that the first door (21) and the second door (22) are opened when the passage (20), which is sealed from the outside, from the transfer device (19) into the docking port (18) and the barrier system (3) is established.

## Revendications

1. Système de barrière (3) destiné au traitement de produits pharmaceutiques en tant que produit à transporter (2), présentant un dispositif (1) pour la manipulation du produit à transporter (2) à l'intérieur du système de barrière (3), présentant un moyen manipulateur (4) disposé dans le système de barrière (3) et comportant un actionneur magnétique (5) permettant d'exercer une force magnétique (6) sur le produit à transporter (2), lequel actionneur magnétique présente une direction d'action magnétique (6) de la force magnétique (7) déterminée par sa conception, dans lequel le moyen manipulateur (4) est disposé à l'intérieur du système de barrière (3) et est conçu pour accoupler le produit à transporter (2) au moyen manipulateur (4) à l'aide de la force magnétique (7) et pour le déplacer avec le moyen manipulateur (4) à l'intérieur du système de barrière (3), dans lequel le produit à transporter présente un élément d'accouplement (12) comportant des propriétés magnétiques, **caractérisé en ce que**
l'élément d'accouplement (12) et l'actionneur magnétique (5) présentent respectivement au moins un élément magnétique de pôle nord (13) et au moins un élément magnétique de pôle sud (14), dans lequel l'actionneur magnétique (5) peut être amené au choix dans une première orientation (15) ou une deuxième orientation (16) par rapport à l'élément d'accouplement (12), dans lequel, dans une première orientation (15), les éléments magnétiques (13, 14) coopèrent de telle sorte qu'une force magnétique d'attraction (7) est générée par l'actionneur magnétique (5) vers l'élément d'accouplement (12), et dans lequel, dans une deuxième orientation (15), les éléments magnétiques (13, 14) coopèrent de telle sorte qu'une force magnétique de répulsion (7) est générée par l'actionneur magnétique (5) vers l'élément de couplage (12).

2. Système de barrière (3) selon la revendication 1, dans lequel l'actionneur magnétique (5) présente au moins un électroaimant.

3. Système de barrière (3) selon la revendication 1 ou 2, dans lequel le moyen manipulateur (4) est conçu pour déplacer le produit à transporter (2) avec une direction de déplacement (8) qui présente au moins une composante directionnelle parallèle à la direction d'action magnétique (6) de la force magnétique (7).

4. Système de barrière (3) selon la revendication 3, dans lequel la direction d'action magnétique (6) de la force magnétique (7) et la direction de déplacement (8) du produit à transporter (2) s'étendent parallèlement.

5. Système de barrière (3) selon l'une des revendications 1 à 4, dans lequel le produit à transporter (2) présente un matériau comportant des propriétés magnétiques.

6. Système de barrière (3) selon l'une des revendications 1 à 4, dans lequel le produit à transporter (2) est un conteneur de transport (9) destiné à un matériau.

7. Système de barrière (3) selon l'une des revendications précédentes, dans lequel l'actionneur magnétique (5) est disposé sur une tête de moyen manipulateur (10) qui peut tourner autour d'un axe de rotation (11) orienté parallèlement à la direction d'action magnétique (6).

8. Système de barrière (3) selon l'une des revendications précédentes, dans lequel, en plus de la première orientation (15) et de la deuxième orientation (16), une troisième orientation (23) est prévue, dans laquelle à la fois des forces magnétiques d'attraction (7) et des forces magnétiques de répulsion (7) agissent de telle sorte qu'aucune force résultante n'est exercée par l'actionneur magnétique (5) sur l'élément d'accouplement (12).

9. Système de barrière (3) selon l'une des revendications précédentes, dans lequel des éléments magnétiques de pôle nord (13) et des éléments magnétiques de pôle sud (14) sont disposés en alternance sur une trajectoire (17) entourant un axe de rotation (11) de l'actionneur magnétique (5), de sorte qu'au moyen d'une rotation de l'actionneur magnétique (5) autour de l'axe de rotation une première orientation ou une deuxième orientation de l'actionneur magnétique (5) par rapport à l'élément d'accouplement peut être établie au choix.

10. Système de barrière (3) selon l'une des revendications précédentes, dans lequel le moyen manipulateur (4) est disposé dans le système de barrière (3) par rapport à un port d'arrimage (18), dans lequel un dispositif de transfert (19) destiné à convoyer le produit à transporter (2) dans le système de barrière (3) peut être raccordé au port d'arrimage (18) et le port d'arrimage (18) est conçu pour former un passage (20) étanche vers l'extérieur depuis le dispositif de transfert (19) jusque dans le système de barrière (3), dans lequel le produit à transporter (2) peut être convoyé à l'aide de l'actionneur magnétique (5) depuis le dispositif de transfert (19), à travers le passage (20), et dans le port d'arrimage (18) et le système de barrière (3).

11. Système de barrière (3) selon la revendication 10, dans lequel le port d'arrimage (18) présente une première porte (21) qui ferme le port d'arrimage (18) et dans lequel le dispositif de transfert (19) présente une seconde porte (22) qui ferme le dispositif de transfert (19), dans lequel le port d'arrimage (18) est conçu pour coopérer avec le dispositif de transfert (19) de telle sorte que la première porte (21) et la seconde porte (22) s'ouvrent lorsque le passage (20) étanche vers l'extérieur depuis le dispositif de transfert (19) jusque dans le port d'arrimage (18) et le système de barrière (3) est réalisé.
